Europäisches Patentamt

(19) European Patent Office

Office européen des brevets

(11) Veröffentlichungsnummer: **0 003 566**
A1

# (12) EUROPÄISCHE PATENTANMELDUNG

(21) Anmeldenummer: 79100298.3

(22) Anmeldetag: 01.02.79

(51) Int. Cl.²: **G 01 F 23/28**, B 60 K 15/06

(30) Priorität: 03.02.78 DE 2804639
02.03.78 DE 2809087

(43) Veröffentlichungstag der Anmeldung: 22.08.79
Patentblatt 79/17

(84) Benannte Vertragsstaaten: **FR GB IT**

(71) Anmelder: **SIEMENS AKTIENGESELLSCHAFT Berlin und München, Postfach 261, D-8000 München 22 (DE)**

(72) Erfinder: **Schneider, Wolfgang, Dr.,Dipl.-Phys, Schneefinkenweg 7, D-8000 München 82 (DE)**
Erfinder: **Kammermaier, Johann, Dr.,Dipl.-Phys., Ziehrerstrasse 19, D-8025 Unterhaching (DE)**

(54) **Füllstandsanzeiger.**

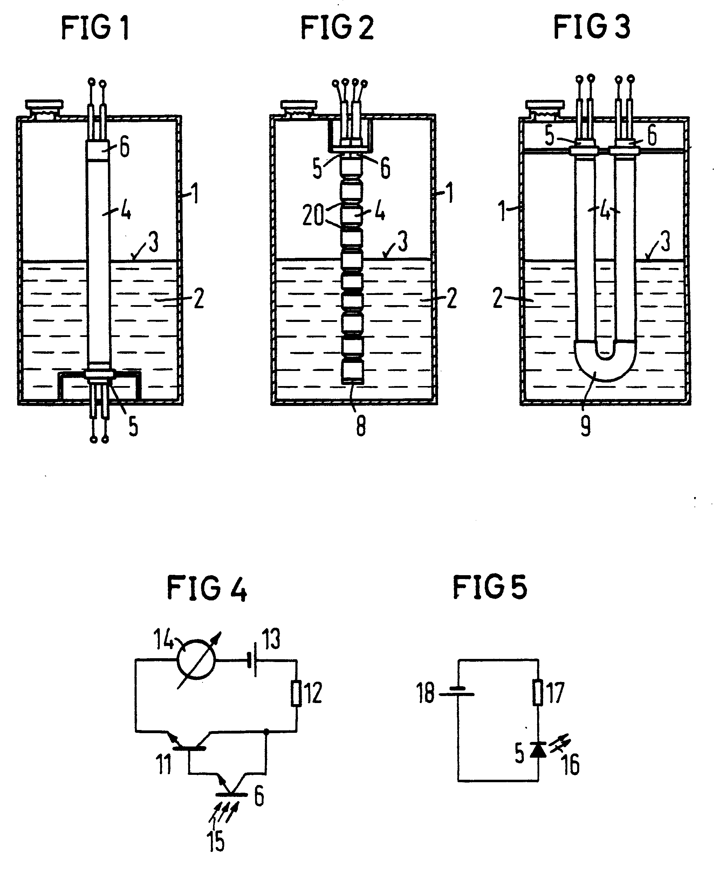

(57) Die Erfindung betrifft einen Füllstandsanzeiger, der vorzugsweise für Kraftstofftanks geeignet ist. Zur Messung der Füllstandshöhe (3) in einem Behälter (1) dient ein bruchfester Stab (4) mit lichtleitenden Eigenschaften, der an seinen beiden Enden einen Lichtsender (5) bzw. einen Lichtempfänger (6) hat und gegenüber üblichen Kraftstoffen beständig ist. Der durch den Stab (4) fließende Lichtstrom wird durch die Füllstandshöhe (3) beeinflußt, so daß der vom Lichtempfänger (6) abgegebene elektrische Strom als Maß für die Füllstandshöhe dient (Fig. 2).

EP 0 003 566 A1

SIEMENS AKTIENGESELLSCHAFT     Unser Zeichen
Berlin und München             VPA 78 P 1 0 1 4 EPC

Füllstandsanzeiger

Die Erfindung betrifft einen Füllstandsanzeiger nach
dem Oberbegriff des Patentanspruchs 1.

Die zuverlässige quantitative Erfassung des Pegels einer in einem Vorratsbehälter befindlichen Flüssigkeit,
wie zum Beispiel Kraftstoff im Tank eines Kraftfahrzeugs, erfordert ein mit elektronischen Vorrichtungen
kompatibles Meß- und Anzeigesystem.

Die Füllstandsmessung von Flüssigkeiten in Behältern
erfolgt bisher mit Hilfe mechanisch arbeitender Einrichtungen. So wird zum Beispiel ein Schwimmkörper verwendet, dessen jeweilige Lage über ein Hebelsystem auf
einen abgreifbaren elektrischen Widerstand übertragen
wird, wodurch die Füllstandshöhe meßbar erfaßt werden
kann. Auf Grund der bewegten Massen sind derartige Meßsysteme aber insbesondere bei Erschütterungen störan-

Kot 1 Dx / 19.12.1978

fällig und außerdem lediglich bei annähernd quaderförmigen Behältern und nicht bei beliebig geformten Behältern anwendbar.

Es ist daher Aufgabe der Erfindung, einen Füllstandsanzeiger anzugeben, der gegenüber äußeren Einflüssen möglichst wenig störanfällig ist und außerdem bei beliebig geformten Behältern eingesetzt werden kann.

Diese Aufgabe wird erfindungsgemäß durch die im kennzeichnenden Teil des Patentanspruchs 1 angegebenen Merkmale gelöst.

Eine Weiterbildung der Erfindung besteht darin, daß die Einrichtung ein Stab ist. Der Stab ist mit Kerben oder Riefen oder Rillen versehen. Er kann zum Beispiel aus lichtdurchlässigem Kunststoff oder Glas bestehen. Als Kunststoff ist beispielsweise Polymethylmetacrylat oder Polycarbonat besonders geeignet.

Der Lichtsender kann an einem Ende des Stabes und der Lichtempfänger am anderen Ende des Stabes vorgesehen sein.

Es ist auch möglich, den Lichtsender und den Lichtempfänger am einen Ende des Stabes und einen Lichtreflektor am anderen Ende des Stabes vorzusehen.

Der Stab kann weiterhin U-förmig gestaltet sein und an seinem einen Ende den Lichtsender und an seinem anderen Ende den Lichtempfänger aufweisen. Vorzugsweise ist dann die Biegung des Stabes mit einem reflektierenden Material versehen.

Die Kerben verlaufen in einer Weiterbildung der Erfindung senkrecht zur Achsrichtung auf der Mantelfläche des Stabes und sind ringförmig gestaltet.

Als Lichtsender ist eine Leuchtdiode vorgesehen. Der Lichtempfänger kann eine Fotodiode oder ein Fototransistor oder allgemein eine Fotozelle sein.

Vorzugsweise wird der vom Lichtempfänger abgegebene Strom durch eine Darlington-Schaltung verstärkt.

Der erfindungsgemäße Füllstandsanzeiger ist besonders für Tanks von Kraftfahrzeugen geeignet. Er kann jedoch auch zum Beispiel im Bereich der Maschinen- und Regeltechnik eingesetzt werden, etwa um in strömenden Flüssigkeiten durch Messung des Strömungsdruckes mit Hilfe der in einer Flüssigkeitssäule sich ausbildenden Pegelhöhe Strömungsgeschwindigkeit und Durchflußmenge zu erfassen und zu steuern. Diese Flüssigkeitssäule entsteht dabei in einem Rohr, das von dem Rohr abzweigt, in dem sich die zu messende Flüssigkeit befindet.

Bei der Erfindung wird also die Pegelhöhe einer Flüssigkeit durch Messung des Lichtes im sichtbaren oder kurzwelligen Infrarot-Bereich bestimmt, welches durch die in der Flüssigkeit befindliche und über den Flüssigkeitsspiegel herausragende lichtleitende Einrichtung hindurchgeht. Als lichtleitend wirkendes Material sind Gläser oder das Licht nicht schwächende Kunststoffe geeignet. Die Einrichtung ist in vorteilhafter Weise ein Rundstab, der geradlinig oder gekrümmt der jeweiligen Behälterform angepaßt sein kann. Als Lichtquelle eignen sich wegen ihrer hohen Lebensdauer und Konstanz der Lichtemission besonders Leuchtdioden (LED). Als Lichtempfänger werden wegen ihrer hohen Empfindlichkeit vorzugsweise Fototransistoren eingesetzt, die das auf sie auftreffende Licht in ein elektrisch verarbeitbares Signal umwandeln. Die Lichtquelle und der Lichtempfänger sind an die längliche Einrichtung mit lichtleitenden Eigenschaften angekoppelt. Befindet sich der Lichtleiter in Luft oder in einem anderen gasförmigen Medium mit kleinem Brechungsindex in der Größenordnung von 1, so wird wegen des wesentlich höheren Brechungsindex des Glas- oder Kunststoffmaterials das in dieses eingekoppelte Licht vorzugsweise durch Totalreflexion weitergeleitet. Wird jedoch der Lichtleiter von einer Flüssigkeit umgeben, deren Brechungsindex merklich größer als der des umgebenden gasförmigen Mediums ist, so ist der Anteil des seitlich austretenden und damit den Lichtempfänger nicht mehr erreichenden Lichtes größer. Damit kann prinzipiell durch Messung des vom Lichtempfänger aufgenommenen Lichtes die Pegelhöhe einer Flüssigkeit stetig und kontinuierlich bestimmt werden.

Die Anwendbarkeit eines Lichtleiters für Füllstandsmessungen kann allerdings dann beeinträchtigt sein, wenn vor allem in geschlossenen Gefäßen an dem in die Dampfphase der Flüssigkeit beziehungsweise in den Luftraum ragenden Teil des Lichtleiters ein dünner Film der Flüssigkeit kondensiert oder bestehen bleibt. Um einen dadurch bedingten störenden Effekt zu vermeiden, hat der Lichtleiter vorzugsweise in bestimmten Abständen Kerben oder Riefen oder Rillen oder Furchen oder dergleichen.

Die auf die Randzonen des Lichtleiters auftreffenden Lichtstrahlen werden an diesen Kerben usw. in Luft oder in einem anderen gasförmigen Medium durch Brechung und partielle Reflexion zu einem größeren Teil als bei dem glatten Teil nach außen abgelenkt. Das im Lichtleiter weitergeleitete Licht wird unter dieser Voraussetzung damit an jeder Kerbe usw. in definierter Weise schwächer. Dieser Effekt nimmt ab, wenn die Kerbe usw. in die Flüssigkeit eintauchen, das auf Grund der geänderten Brechungsverhältnisse, nämlich eines höheren Brechungsindex in der Flüssigkeit, ein größerer Lichtanteil im Lichtleiter weitergeführt wird. Befindet sich
so ein Lichtleiter in Luft oder in einem von einem gasförmigen Medium erfüllten Raum, so ist die zum Lichtempfänger gelangende Lichtenergie am geringsten. Mit
wachsender Zahl der von der Flüssigkeit umgebenen
Kerben usw. erhöht sich der zum Lichtempfänger gelangende Lichtstrom monoton und reproduzierbar. Durch eine
entsprechende Anzahl von Kerben usw. mit geeigneter
Form und gegebenenfalls variabler Tiefe kann damit für
beliebige Behälterformen eine genaue Füllstandsmessung
unabhängig von mechanisch bewegten Teilen durchgeführt
werden.

Der erfindungsgemäße Füllstandsanzeiger für Flüssigkeiten oder Fluids in einem Behälter zeichnet sich also aus
durch eine sich im Behälter von unten nach oben erstrekkende längliche Einrichtung mit lichtleitenden Eigenschaften, die mit einem Lichtsender und einem Lichtempfänger versehen ist, so daß aus dem empfangenen Lichtstrom die Füllstandshöhe ablesbar ist. Für die vorzugsweise die Form eines Stabes aufweisende Einrichtung ist
als Material ein lichtdurchlässiger Kunststoff oder Glas
möglich, wobei der Kunststoff Polymethylmethacrylat oder
Polycarbonat ist.

Glasstäbe sind für sichtbares und infrarotes Licht
durchsichtig und in flüssigen Kraftstoffen durchweg beständig. Es hat sich nun gezeigt, daß sie gegenüber einer Formgebung mit Kerben (vergleiche unten) bruchempfindlich sind. Polymethylmethacrylat und Polycarbonat
sind thermoplastische und für sichtbares und infrarotes Licht durchsichtige Kunststoffe, die wegen ihrer Elastizität weniger bruchempfindlich als Glas sind. Es hat sich weiter gezeigt, daß diese Kunststoffe in bestimmten Kraftstoffen mit Benzol- und Methanolgehalt eine gewisse Unbeständigkeit zeigen.

Es soll daher noch ein Werkstoff für die längliche Einrichtung mit lichtleitenden Eigenschaften angegeben werden, der einerseits wenig bruchempfindlich ist und andererseits gegenüber Kraftstoffen eine hohe Beständigkeit zeigt.

Derartige Werkstoffe sind im kennzeichnenden Teil des Patentanspruches 15 angegeben.

Die im kennzeichnenden Teil des Patentanspruches 15 angegebenen thermoplastischen Kunststoffe sind für sichtbares und infrarotes Licht klar durchsichtig und können als stab- beziehungsweise rohrförmiges Halbzeug bezogen oder als Granulat im Spritzgußverfahren verarbeitet werden. Das Copolymerisat aus Methylmethacrylat und Acrylnitril (AMMA) und Polyvinylfluorid (PVF) sind in Benzin, Benzol, Mineralöl und Methanol dauerbeständig. Polychlortrifluoräthylen (PCTFE) ist in Benzin, Mineralöl und Methanol dauerbeständig und wird von Benzol erst bei Temperaturen über 80 °C angegriffen.

Der Stab kann auch aus einem Kern aus Polymethylmethacrylat oder Polycarbonat bestehen und mit einer dünnen, zusammenhängenden Schicht aus einem Fluorkohlenstoffpolymerisat überzogen werden, was zum Beispiel durch Glimmpolymerisation von gasförmigen Fluorkohlenstoffmonomeren geschehen kann. Durch diese dünne Schicht, die in Benzin, Mineralöl, Benzol und Methanol unlöslich ist, wird Dauerbeständigkeit des Stabkernes aus Polymethylmethacrylat oder Polycarbonat in allen üblichen flüssigen Kraftstoffen erreicht.

Vorzugsweise ist die Schicht dünner als 1 $\mu$m, so daß sie in den Kerben, Riefen oder Rillen des als Lichtleiter dienenden Stabes den Lichtaustritt nicht merklich beeinflußt und die Funktionsfähigkeit des Lichtleiters nicht beeinträchtigt wird. An den Stellen jedoch, an denen das Licht streifend zum Stabrand gelangt, führt die Schicht wegen ihrer niedrigen Brechzahl zu Totalreflexion, so daß diese Lichtanteile in den Stab zurückgelenkt und undefinierte Lichtverluste durch Streuung vermieden werden. Die dünne Schicht ist daher auch bei einem lichtleitenden Stab aus einem Copolymerisat aus Methylmethacrylat und Acrylnitril oder aus Polyvinylfluorid oder aus Glas vorteilhaft, wobei sie zusätzlich die Bruchfestigkeit von Glas verbessert.

Die längliche Einrichtung kann auch aus einzelnen Lichtleitern bestehen, die im Behälter in verschiedenen Höhen umgebogen sind, so daß aus der gesamten durchgelassenen Lichtmenge die Füllstandshöhe ablesbar ist.

Nachfolgend wird die Erfindung an Hand der Zeichnung näher erläutert. Es zeigen:

Fig. 1      ein erstes Ausführungsbeispiel des erfindungsgemäßen Füllstandsanzeigers,

Fig. 2 und 3 weitere Ausführungsbeispiele für die Gestaltung der länglichen Einrichtung (Lichtleiter) mit lichtleitenden Eigenschaften,

- 8 -     VPA 78 P 1014 EPC

Fig. 4     die elektrische Schaltung für den Lichtempfänger, und

Fig. 5     die elektrische Schaltung für den Lichtsender.

In Fig. 1 ist in einem Behälter 1 eine Flüssigkeit 2 mit einem Flüssigkeitspegel 3 vorgesehen. Durch den Behälter 1 erstreckt sich ein Lichtleiter 4, an dessen unterem Ende eine Leuchtdiode 5 und an dessen oberen Ende ein Fototransistor 6 liegen.

Fig. 2 zeigt ein anderes Ausführungsbeispiel der Erfindung, bei dem am oberen Ende des mit Kerben 20 versehenen Lichtleiters 4 eine Leuchtdiode 5 und ein Fototransistor 6 vorgesehen sind. Am unteren Ende des Lichtleiters 4 ist dabei ein Spiegel oder eine reflektierende Fläche 8 angeordnet.

In Fig. 3 ist der Lichtleiter 4 U-förmig und hat an seinen Enden eine Leuchtdiode 5 beziehungsweise einen Fototransistor 6. Die Biegung des Lichtleiters ist dabei mit einer reflektierenden Schicht 9 versehen.

Fig. 4 zeigt die Schaltung des Fototransistors 6, der in Darlington-Schaltung mit einem weiteren Transistor 11 verbunden ist. Die beiden Kollektoren der Transistoren 6 und 11 sind mit dem einen Anschluß eines Strombegrenzungswiderstandes 12 von 10 bis 1000 Ohm verbunden, dessen anderer Anschluß über eine Stromquelle 13 an eine Anzeigeeinrichtung (Strommesser) 14 angeschlossen ist. Der Emitter des Transistors 11 ist ebenfalls mit der Anzeigeeinrichtung 14 verbunden.

Wenn Licht auf den Fototransistor 6 einfällt, wie dies durch Pfeile 15 dargestellt ist, so wird der vom Transistor 6 abgegebene Strom durch den Transistor 11 verstärkt und bewirkt so einen dem einfallenden Licht entsprechenden Ausschlag der Anzeigeeinrichtung 14.

Fig. 5 zeigt die Schaltung der Leuchtdiode 5, die durch Pfeile 16 angedeutetes Licht in den Lichtleiter 4 abgibt. Die Leuchtdiode 5 ist einerseits über einen Strombegrenzungswiderstand 17 mit dem einen Pol einer Stromquelle 18 und andererseits direkt mit der Stromquelle 18 verbunden.

Selbstverständlich können die Kerben 20 bei allen Ausführungsbeispielen vorgesehen sein.

16 Patentansprüche
5 Figuren

Patentansprüche

1. Füllstandsanzeiger für Flüssigkeiten oder Fluids in einem Behälter, g e k e n n z e i c h n e t d u r c h  eine sich im Behälter (1) von unten nach oben erstreckende längliche Einrichtung (4) mit lichtleitenden Eigenschaften, die mit einem Lichtsender (5) und einem Lichtempfänger (6) versehen ist, so daß aus dem empfangenen Lichtstrom die Füllstandshöhe (3) ab-lesbar ist.

2. Füllstandsanzeiger nach Anspruch 1, d a d u r c h g e k e n n z e i c h n e t ,  daß die Einrichtung (4) ein Stab ist.

3. Füllstandsanzeiger nach Anspruch 2, d a d u r c h g e k e n n z e i c h n e t ,  daß der Stab Kerben (beziehungsweise Riefen oder Rillen) (20) hat.

4. Füllstandsanzeiger nach einem der Ansprüche 1 bis 3, d a d u r c h  g e k e n n z e i c h n e t ,  daß die Einrichtung (4) aus lichtdurchlässigem Kunststoff oder Glas besteht.

5. Füllstandsanzeiger nach Anspruch 4, d a d u r c h g e k e n n z e i c h n e t ,  daß der Kunststoff Polymethylmetacrylat oder Polycarbonat ist.

6. Füllstandsanzeiger nach einem der Ansprüche 2 bis 5, d a d u r c h  g e k e n n z e i c h n e t ,  daß der Lichtsender (5) am einen Ende des Stabes und der Lichtempfänger (6) am anderen Ende des Stabes vorgesehen ist.

0003566

7. Füllstandsanzeiger nach einem der Ansprüche 2 bis 5, d a d u r c h   g e k e n n z e i c h n e t , daß der Lichtsender (5) und der Lichtempfänger (6) am einen Ende des Stabes und ein Lichtreflektor (8) am anderen Ende des Stabes vorgesehen sind.

8. Füllstandsanzeiger nach einem der Ansprüche 2 bis 5, d a d u r c h   g e k e n n z e i c h n e t , daß der Stab U-förmig gestaltet ist und an seinem einen Ende den Lichtsender (5) und an seinem anderen Ende den Lichtempfänger (6) aufweist.

9. Füllstandsanzeiger nach Anspruch 8, d a d u r c h   g e k e n n z e i c h n e t ,   daß der Stab an seiner Biegung mit reflektierendem Material (9) versehen ist.

10. Füllstandsanzeiger nach Anspruch 3, d a d u r c h   g e k e n n z e i c h n e t ,   daß die Kerben (20) senkrecht zur Achsrichtung auf der Mantelfläche des Stabes vorzugsweise ringförmig angebracht ist.

11. Füllstandsanzeiger nach einem der Ansprüche 1 bis 10, d a d u r c h   g e k e n n z e i c h n e t , daß der Lichtsender (5) eine Leuchtdiode ist.

12. Füllstandsanzeiger nach einem der Ansprüche 1 bis 11, d a d u r c h   g e k e n n z e i c h n e t , daß der Lichtempfänger (6) eine Fotodiode oder ein Fototransistor oder Fotozelle ist.

13. Füllstandsanzeiger nach einem der Ansprüche 1 bis 12, d a d u r c h   g e k e n n z e i c h n e t , daß der vom Lichtempfänger (6) abgegebene Strom durch eine Verstärkerstufe (11) verstärkt wird.

14. Verwendung des Füllstandsanzeigers nach einem der
Ansprüche 1 bis 13 für die Pegelhöhe des Kraftstoffes in
Kraftstofftanks von Kraftfahrzeugen.

15. Füllstandsanzeiger nach Anspruch 1,  d a d u r c h
g e k e n n z e i c h n e t ,  daß die Einrichtung (4)
aus einem Copolymerisat aus Methylmethacrylat und Acrylnitril oder aus Polyvinylfluorid oder aus Polychlortrifluoräthylen oder aus einer dünnen Schicht (19) aus
Fluorkohlenstoffpolymerisat auf einem Kern aus Polymethylmethacrylat oder einem Kern aus Polycarbonat oder
einem Kern aus einem Copolymerisat aus Methylmethacrylat
und Acrylnitril oder einem Kern aus Polyvinylfluorid
oder einem Kern aus Glas besteht.

16. Füllstandsanzeiger nach Anspruch 15,  d a d u r c h
g e k e n n z e i c h n e t ,  daß die Schicht (19)
dünner als 1 /um ist.

0003566

¼

FIG 1  FIG 2  FIG 3

FIG 4  FIG 5

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US – A – 2 984 148 (J. VOLLMER) <br><br> * Figuren 1-3; Spalte 2, Zeilen 61-67 * <br><br> --- | 1,2,4-6,15 |
| | SOVIET JOURNAL OF INSTRUMENTATION AND CONTROL, November 1968, Nr. 11, <br> Oxford, <br> N.V. KRAVTSOV et al.: "Level sensors based on total internal reflection", Seiten 50,51 <br><br> * Figuren 1,3; Seite 51, linke Spalte, Zeilen 3-17 * <br><br> --- | 1-4,6,8,13 |
| | US – A – 3 683 196 (R.E. OBENHAUS) <br><br> * Figuren 1-3 * <br><br> --- | 1,3,10 |
| | FR – A – 2 103 683 (S.A.R.L.) <br><br> * Figur 5 * <br><br> --- | 1,6-8 |
| | DE – A – 1 548 983 (HACTRONIC AG) <br><br> * Figur 1 * <br><br> --- | 1,6,8 |
| | US – A – 3 448 616 (W.J. WOSTL et al.) <br><br> * Figuren 1,2 * <br><br> --- | 1,2,4 |
| | US – A – 3 908 129 (DATAGAGE SYSTEMS INC.) <br><br> * Figur 3 * <br><br> ---- | 11,12 |

**KLASSIFIKATION DER ANMELDUNG (Int.Cl.²)**

G 01 F 23/28
B 60 K 15/06

**RECHERCHIERTE SACHGEBIETE (Int. Cl.²)**

G 01 F 23/28
B 60 K 15/06

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26-04-1979 | THIBO |

EPA form 1503.1  06.78